Europäisches Patentamt

(19) European Patent Office

Office européen des brevets

(11) Publication number: **0 003 347**
**B1**

(12) **EUROPEAN PATENT SPECIFICATION**

(45) Date of publication of patent specification: **25.11.81**

(21) Application number: **79100190.2**

(22) Date of filing: **23.01.79**

(51) Int. Cl.³: **G 03 B 19/04, G 03 B 3/00, G 03 B 7/00, G 02 B 7/04**

(54) Camera adjustment mechanism.

(30) Priority: **27.01.78 US 872858**

(43) Date of publication of application:
**08.08.79 Bulletin 79/16**

(45) Publication of the grant of the European patent:
**25.11.81 Bulletin 81/47**

(84) Designated Contracting States:
**DE GB**

(56) References cited:
**DE - A - 2 727 168**
**DE - U - 1 978 478**
**DE - U - 7 405 489**
**US - A - 3 893 135**
**US - A - 3 947 860**
**US - A - 4 070 686**

(73) Proprietor: **EASTMAN KODAK COMPANY**
**343 State Street**
**Rochester, New York 14650 (US)**

(72) Inventor: **Smart, David Clinton**
**901 Elmgrove Road**
**Rochester New York (US)**

(74) Representative: **Blickle, K. Werner, Dipl.-Ing. et al,**
**KODAK AKTIENGESELLSCHAFT Postfach 369**
**D-7000 Stuttgart 60 (DE)**

Courier Press, Leamington Spa, England.

Camera adjustment mechanism

The present invention relates to a mechanism for manually adjusting a camera function, such as focus, aperture, shutter speed or automatic exposure control.

Manual focus, aperture and shutter adjustment mechanism in 35 mm and larger cameras are generally placed on the lens barrel. Smoothness of focus adjustment while the operator looks through a range finder is assisted by designing substantial mechanical advantage into well-machined screw threads in which the lens barrel moves.

However, in modern subminiature cameras, the lens barrel is not accessible. Such cameras commonly are provided with a manual focus or exposure slider coupled to a manipulatable member which projects through a slot in the external camera housing. By various linkages the position of the slider controls the adjustment of the camera function. When, for example, focusing adjustment is desired, the manipulatable member is manually pushed along the camera slot moving the slider and causing the camera lens to be moved along its optical axis. An example of such a structure is shown in U.S. Patent 4,070,686.

Similar slider and slot structures are used on much larger cameras, for example, certain instant cameras, in which grasping the lens barrel would require removing one hand from a position holding the camera. Thus, such sliders have the advantage that the camera can usually be held by two hands, with one finger of a holding hand adjusting the camera function as the operator looks through a range finder or views a focusing scale in the viewfinder.

A certain amount of friction must be present or built into the system to hold the adjustment when made. The mechanism in U.S. 4,070,686 is designed to reduce the required friction. However, it is possible for an operator to appreciably increase the forces which oppose starting movement of the slider by pressing down sufficiently hard on the slider to create substantial static friction between the slider and its supporting guide surfaces. Once the static friction is overcome by application of greater force, the slider often moves rapidly past the desired position, where the process must be repeated in the reverse direction. Such static friction will, of course, prevent a smooth and easy action of the slider. It may result in imprecise focus or exposure settings and wear of parts. Perhaps more significantly, the lack of smooth and easy action of the slider strongly affects the operator's conception of convenience in use of the camera. DE—GM 7,405,489 shows a common attempt to solve this problem by driving the slider with a stationary gear. However, the stationary gear necessarily adds friction to the system and does not easily fit into the tight camera space.

It is the object of the invention to provide a mechanism in which the position of a slider controls adjustment of a camera function, which slider is movable by a manually manipulatable member protruding through a slot in the exterior housing, but in which the associated frictional forces are controlled or overcome to provide a smooth and easy movement.

This object is accomplished by a structure in which the manually manipulatable member is a movable rotatable pinion coupled to the slider. The pinion engages a fixed rack for translation along the rack and protrudes through the slot for rotation by the finger of the operator.

Should the camera operator press down on the pinion as it is being rotated, the resulting reaction force is at least partially transferred to the interface between the rack and pinion where static friction is quite small. Further, movement of the operator's finger a given distance will move the slider one-half that distance, or less. This mechanical advantage means that it takes less finger force to overcome any given static friction. In addition to providing smoothness, this mechanical advantage also assists in precise adjustment.

According to one embodiment the pinion is a single pinion with a toothed surface which both engages the rack and is engagable by the operator.

According to another embodiment the pinion is compound including both a first pinion member which engages the rack and a second pinion member coupled to the first pinion member which protrudes through the slot and is engagable by the operator.

According to a further preferred embodiment, the slider lies adjacent to and overlaps the camera slot. As a result, the slider maintains the camera slot substantially closed to dirt or other foreign matter during the various stages of rotation of the pinion.

For a complete understanding of the present invention, as well as further advantages and features thereof, reference should be had to the following detailed description of the invention taken in conjunction with the accompanying drawings, in which:

Fig. 1 is a fragmentary perspective view of a still picture camera which embodies a focus adjustment mechanism is accordance with the present invention;

Fig. 2 is an exploded perspective view of an interior portion of the camera depicted in Fig. 1, showing the focus adjustment mechanism in detail;

Fig. 3 is an elevational view in section of a modification of the focus adjustment mechanism; and

Fig. 4 is a fragmentary perspective view of an exposure adjustment mechanism in accordance with the present invention.

Because cameras are well known, this description will be directed in particular to elements forming part of or cooperating directly with apparatus in accordance with the present invention. It is to be understood that camera elements not specifically shown or described may take various forms known to those skilled in the camera art.

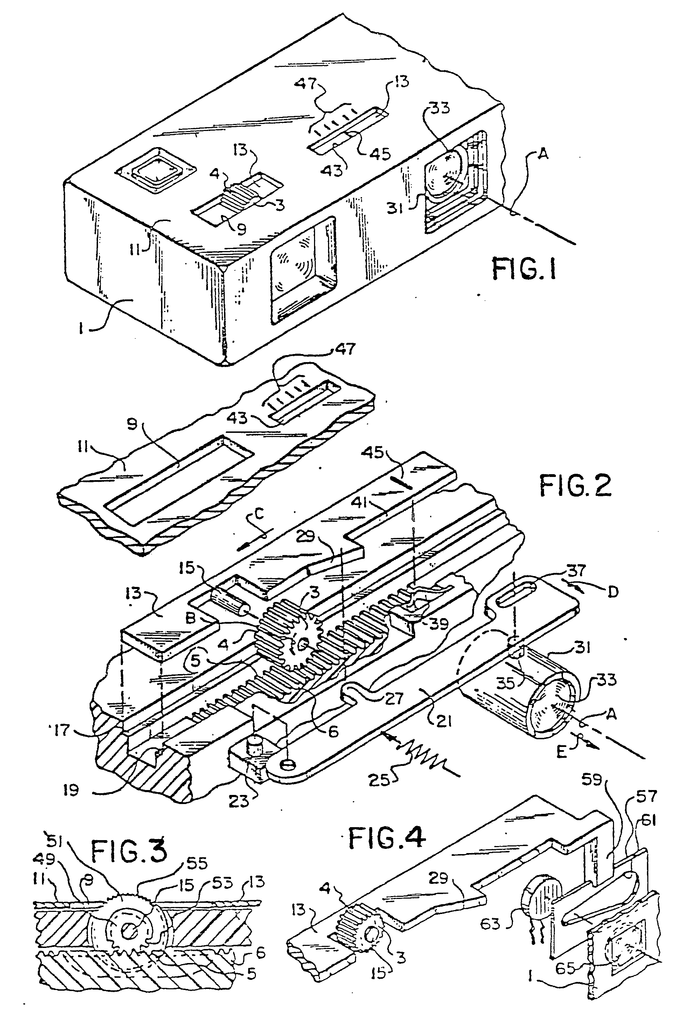

Referring now to the drawings and in particular to Figs. 1 and 2, there is shown a subminiature camera having a camera body 1 which houses a pinion 3. The pinion 3 has a toothed surface 4 engaging a toothed side 5 of a fixed rack 6. The rack may be integrally formed with the camera body 1. The pinion is translated along the rack as the pinion is rotated.

As shown in Fig. 1, the toothed surface 4 of the rotatable pinion 3 protrudes through a slot 9 in a planar top wall 11 of the exterior housing of the camera. This enables the pinion 3 to be manually rotated by a camera operator. The slot 9 extends substantially parallel to the rack 6 and, as viewed in Fig. 2, is of sufficient length to permit translation of the pinion along the rack as the pinion is manually rotated.

A slider 13 is provided with a shaft pin 15 which couples the slider to the pinion 3. The slider 13 is supported on two parallel, spaced rails 17 and 19 within the camera body 1 for translation by the rotated pinion 3 in parallel adjacent overlapping relation to the slot 9 in the top wall 11. As depicted in Figs. 1 and 2, the slider 13 is wider than the slot 9 and contacts the undersurface of the top wall 11. Thus, the slider 13 maintains the slot 9 substantially closed to dirt or other foreign matter during the various stages of rotation of the pinion 3.

As shown in Fig. 2, a lever 21 is urged by a spring member 25 to pivot in a counterclockwise direction about a mounting pin 23 in the camera body 1. This spring urging causes an extension 27 of the lever 21 to lightly bear against a ramp edge 29 of the slider 13. A lens barrel 31, in which is housed a variable focus objective 33, is provided with a follower pin 35. The follower pin 35 extends into a drive slot 37 in the lever 21. To focus the objective 33 by moving it along the optical axis A, the pinion 3 may be manually rotated about the shaft pin 15 in a counterclockwise direction (arrow B). This translates the slider 13 to the left (arrow C). Thereupon, the ramp edge 29 of the slider 13 pivots the lever 21 in a clockwise direction (arrow D) about the mounting pin 23, driving the lens barrel 31 outwardly (arrow E) along the optical axis A of the objective 33. Manual rotation of the pinion 3 about the shaft pin 15 in a clockwise direction, of course, permits the spring member 25 to drive the lens barrel 31 inwardly along the optical axis A of the objective lens 33, i.e., in the direction opposite to that indicated by arrow E. A guide channel, not shown, but which may be integrally formed with the camera body 1, is connected to the lens barrel 31 to support it for movement in either direction along the optical axis A as the pinion 3 is manually rotated. Friction inducing means in the form of a drag spring 39, which presses against a straight edge 41 of the slider 13, maintains the focus adjustment of the lens barrel 31 by substantially preventing movement of the slider other than by manual rotation of the pinion 3.

Assuming normal camera tolerances, if the camera operator presses down on the pinion 3 as it is being manually rotated to adjust the focus of the objective 33, the resulting reaction force is at least partially transferred to the interface between the pinion and the rack. The extent this force is transferred to the rack rather than the rails 17 and 19 can be controlled in design by adjustment of the bore size in pinion 3 for a given diameter shaft pin 15, the locating of the rails relative to the rack and the size of the pinion. The interface between the pinion and the rack has minimal static friction.

This is in marked contrast to prior art devices in which it is possible for an operator to increase substantially the static frictional forces which oppose manual movement of a focus slider by pressing down on the focus slider. Such frictional forces, of course, prevent a smooth adjustment of the objective lens.

Further, a given distance of linear motion of an operator's finger in rotating the pinion is required to translate the slider one-half that distance. This enables a very precise setting of the objective and makes it easier for the operator to overcome the static friction in overall mechanism, thereby contributing to the smoothness of the movement.

Referring again to Figs. 1 and 2, there is shown a window 43 in the top wall 11 of the exterior housing. A visual indicator 45 on the slider 13 moves to different locations within the window 43 as the slider is translated in response to manual rotation of the pinion 3. The indicator 45 may be aligned with a visual indicator, for example, distance scale and/or focusing symbols 47 on the top wall 11 of the external housing.

A modification of the pinion 3 is shown in Fig. 3. Fig. 3 depicts a compound pinion consisting of first and second pinion members 49 and 51, which are coaxially mounted on the shaft pin 15 of the slider 13 and coupled for simultaneous rotation. The first pinion member 49 has teeth 51 engaging the toothed side 5 of the rack 6. The second pinion member 51, which is larger in diameter than the first pinion member 49, has a knurled edge 55 protruding through the slot 9 in the top wall 11 of the external housing. The knurled edge 55 facilitates manual rotation of the first and second pinion members 49 and 51. The use of a compound pinion, as depicted in Fig. 3, permits the achievement of a mechanical advantage greater than that achieved by the simple pinion 3, shown in Fig. 2 and permits use of a finger-drive surface, i.e., the knurled edge 55, rather than a toothed surface. The Figs. 1 and 2 embodiment has the substantial advantage of simplicity.

Referring now to Fig. 4, there is shown a modification of the adjustment mechanism depicted in Fig. 2, for accomplishing exposure adjustment instead of focus adjustment. A diaphragm blade 57 is connected to the slider 13 by an intermediate arm 59. As is well known to those familiar with exposure control mechanisms, the diaphragm blade 57 may include a substantially teardrop-shaped aperture 61 which is aligned with a photocell 63, located within the camera body 1. The diaphragm blade 57 is disposed behind a light gathering lens 65 which directs ambient light to the photocell 63. When the pinion 3 is manually rotated to translate the slider 13, the diaphragm blade 57 moves with the slider to vary the amount of ambient light reaching the photocell 63. This type structure is commonly used to fine tune an automatic exposure control. However, the blade 57 could also be positioned over the objective axis to adjust directly the aperture setting of the camera. Alternatively, the arm 59 could be coupled to a retard mechanism to adjust the exposure time.

## Claims

1. A mechanism for adjusting a camera function, such as focus, aperture, shutter speed or automatic exposure control, the mechanism including a slider (13) whose position controls the camera function, the slider (13) being within and movable relative to the camera housing (1), and a manually manipulatable member (3; 49, 51) coupled to the slider (13) and protruding through a slot (9) in the housing (1) where it is accessible for manual manipulation, characterized in that the manipulatable member is a pinion (3; 49, 51) which engages a fixed rack (6), the pinion being manually rotatable to move along the rack (6) to change the position of the slider (13).

2. The mechanism according to Claim 1, characterized in that the same surface (4) of the pinion (3) which engages the rack (6) is also engagable by a finger of a camera operator.

3. The mechanism according to Claim 1 characterized in that the pinion (49, 51) includes a first pinion member (49) having teeth (53) which engage the rack and a second pinion member (51) coupled to the first pinion member (49) for rotation therewith and protruding through the slot (9) where it is engagable by a finger of a camera operator.

4. The mechanism according to any of claims 1—3, characterized in that said pinion (3; 49, 51) is rotatably mounted on said slider (13), which itself is mounted to overlap the slot (9) to maintain the slot closed as the slider moves with said pinion when the latter is rotated about its axis.

5. The mechanism according to any of claims 1—4, characterized in that the slider (13) includes a visual indicator (45) which cooperates with a visual indicator (47) on the external housing (1) to indicate the adjustment of the camera function.

6. The mechanism according to any of claims 1—5, characterized in that the function being adjusted is the focus of the camera objective (33).

7. The mechanism according to any of claims 1—5, characterized in that the function being adjusted is exposure control and in that the mechanism includes means (57, 61) for varying the amount of light reaching a photocell (63).

8. The mechanism according to any of claims 1—7, characterized in that the slot (9) is in a planar top surface (11) of a sub-miniature camera and the slider (13) and rack (6) lie in planes substantially parallel to said surface.

## Revendications

1. Mécanisme de réglage d'une fonction d'un appareil de prise de vues, telle que la mise au point, l'ouverture du diaphragme, la vitesse de l'obturateur ou la commande automatique de l'exposition, mécanisme comprenant un coulisseau (13) qui est logé dans le boîtier (1) de l'appareil par rapport auquel il est déplaçable et dont la position commande la fonction de l'appareil, et un organe manoeuvrable à la main (3; 49, 51) associé au coulisseau (13) et faisant saillie au travers d'une fente (9) du boîtier (1) où il est accessible pour être manoeuvré à la main, caractérisé en ce que l'organe manoeuvrable est un pignon (3; 49, 51) qui engrène avec une crémaillère fixe (6), et qu'on peut faire tourner à la main pour qu'il se déplace le long de la crémaillère (6) afin de modifier la position du coulisseau (13).

2. Mécanisme conforme à la revendication 1, caractérisé en ce que la surface (4) du pignon (3) qui engrène avec la crémaillère (6) est aussi celle qui est accessible à un doift de l'opérateur.

3. Mécanisme conforme à la revendication 1 caractérisé en ce que le pignon (49, 51) comprend un premier élément (49) avec une denture (53) qui engrène avec la crémaillère et un second élément (51) qui est accouplé au premier (49) pour tourner avec ce dernier et qui fait saillie au travers de la fente (9) où il est accessible à un doigt de l'opérateur.

4. Mécanisme conforme à l'une des revendications 1—3, caractérisé en ce que le dit pignon (3; 49, 51) est monté tournant sur le dit coulisseau (13), qui est lui-même monté de manière à recouvrir la fente (9) pour la maintenir fermée lorsque le coulisseau se déplace avec le dit pignon quand on fait tourner ce dernier sur son axe.

5. Mécanisme conforme à l'une des revendication 1—4, caractérisé en ce que le coulisseau (13) comprend un repère visuel (45) qui coopère avec un repère visuel (47) placé sur l'extérieur du boîtier (1) de l'appareil pour indiquer le réglage de la fonction.

6. Mécanisme conforme à l'une des revendications 1—5, caractérisé en ce que la fonction qui est réglée est la mise au point de l'objectif (33) de l'appareil.

7. Mécanisme conforme à l'une des revendications 1—5, caractérisé en ce que la fonction qui est réglée est la commande de l'exposition et en ce que le mécanisme comprend des moyens (57, 61) pour modifier le flux lumineux atteignant une cellule photo-électrique (63).

8. Mécanisme conforme à l'une des revendications 1—7 caractérisé en ce que la fente (9) est située sur une surface supérieure plane (11) d'un appareil sub-miniature et en ce que le coulisseau (13) et la crémaillère (6) reposent dans des plans parallèles à la dite surface.

## Patentansprüche

1. Vorrichtung zum Einstellen einer Kamerafunktion wie z. B. der Schärfe, der Blende, der Verschlußzeit oder der automatischen Belichtungssteuerung, mit einem Schieber (13), dessen Stellung die Kamerafunktion steuert und der innerhalb des Kameragehäuses (1) angeordnet und relativ zu diesem bewegbar ist, sowie mit einem von Hand betätigbaren, mit dem Schieber (13) gekoppelten Glied (3; 49, 51), das durch eine Öffnung (9) im Gehäuse (1) hindurchragt und so für eine Betätigung von Hand zugänglich ist, dadurch gekennzeichnet, daß das betätigbare Glied ein Ritzel (3; 49, 51) ist, das mit einer festen Zahnstange (6) in Eingriff steht und so von Hand drehbar ist, daß es sich längs der Zahnstange (6) bewegt und dadurch die Stellung des Schiebers (13) verändert.

2. Vorrichtung nach Anspruch 1, dadurch gekennzeichnet, daß diejenige Fläche (4) des Ritzels (3), die mit der Zahnstange (6) in Eingriff steht, von dem Kamerabenutzer mit einem Finger bewegt werden kann.

3. Vorrichtung nach Anspruch 1, dadurch gekennzeichnet, daß das Ritzel (49, 51) ein erstes Teil (49) mit Zähnen (53) aufweist, die mit der Zahnstange in Eingriff stehen, sowie ein Zweites Teil (51), das mit dem ersten Teil (49) drehfest gekoppelt ist und durch die Öffnung (9) hindurchragt, so daß es von dem Kamerabenutzer mit einem Finger bewegt werden kann.

4. Vorrichtung nach einem der Ansprüche 1—3, dadurch gekennzeichnet, daß das Ritzel (3; 49, 51) auf dem Schieber (13) drehbar gelagert ist, der selbst so gelagert ist, daß er die Öffnung (9) überlappt, so daß diese geschlossen bleibt, wenn das Ritzel um seine eigene Achse gedreht und damit der Schieber bewegt wird.

5. Vorrichtung nach einem der Ansprüche 1—4, dadurch gekennzeichnet, daß der Schieber (13) eine Sichtanzeige (45) aufweist, die mit einer außen am Gehäuse (1) befindlichen Sichtanzeige (47) zusammenwirkt, um die Einstellung der Kamerafunktion anzuzeigen.

6. Vorrichtung nach einem der Ansprüche 1—5, dadurch gekennzeichnet, daß es sich bei der einzustellenden Funktion um die Scharfeinstellung des Kameraobjektivs (33) handelt.

7. Vorrichtung nach einem der Ansprüche 1—5, dadurch gekennzeichnet, daß es sich bei der einzustellenden Funktion um die Belichtungssteuerung handelt und daß die Vorrichtung Mittel (57, 61) besitzt, welche die auf die Fotozelle (63) auftreffende Lichtmenge steuern.

8. Vorrichtung nach einem der Ansprüche 1—7, dadurch gekennzeichnet, daß die Öffnung (9) in einer flachen oberen Wandung (11) einer Kleinstbildkamera ausgebildet ist und der Schieber (13) und die Zahnstange (6) in im wesentlichen parallel zu dieser Oberfläche verlaufenden Ebenen liegen.

0 003 347

FIG.1

FIG.2

FIG.3

FIG.4